# EUROPÄISCHE PATENTSCHRIFT

(11) **EP 1 219 126 B1**
(45) Veröffentlichungstag und Bekanntmachung des Hinweises auf die Patenterteilung: **25.05.2005**
(21) Anmeldenummer: 00982976.3
(22) Anmeldetag: 06.10.2000
(51) Int. Cl.: H04Q 7/22

(54) **FLEXIBLE ZUWEISUNG VON ÜBERTRAGUNGSRESSOURCEN ZU BESTEHENDEN LOGISCHEN VERBINDUNGEN**
FLEXIBLE ALLOCATION OF TRANSMISSION RESOURCES TO EXISTING LOGICAL CONNECTIONS
AFFECTATION FLEXIBLE DE RESSOURCES DE TRANSMISSION A DES CONNEXIONS LOGIQUES EXISTANTES

(30) Priorität: 07.10.1999 DE 19948367
(43) Veröffentlichungstag der Anmeldung: 03.07.2002
(73) Patentinhaber: SIEMENS AKTIENGESELLSCHAFT, 80333 München (DE)
(72) Erfinder: MENZEL, Christian, 82216 Maisach (DE)
(86) Internationale Anmeldenummer: PCT/DE2000/003537
(87) Internationale Veröffentlichungsnummer: WO 2001/026395

(56) Entgegenhaltungen:
- WO-A-99/07170
- US-A- 5 729 531

## Beschreibung

Die Erfindung betrifft ein Verfahren zur Zuweisung von Übertragungsressourcen zu bestehenden logischen Verbindungen von Teilnehmerstationen zu einer Basisstation eines Funk-Kommunikationssystems.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung von Signalen mit den elektromagnetischen Wellen erfolgt sowohl in Abwärtsrichtung (downlink) von der Basisstation zu Teilnehmerstation, als auch in Aufwärtsrichtung (uplink) von der Teilnehmerstation zur Basisstation.

Aus DE 198 10 285 A1 ist bekannt, daß zur Unterscheidung der Signalquellen und damit zur Auswertung der Signale als Frequenzmultiplex (FDMA), Zeitlagenmultiplex (TDMA) oder Codemultiplex (CDMA) bekannte Verfahren dienen, die auch miteinander kombiniert werden können. Eine Ausprägung des Zeitlagenmultiplex (TDMA) ist das TDD (time division duplex) Übertragungsverfahren, bei dem in einem gemeinsamen Frequenzband die Übertragung sowohl in Aufwärtsrichtung, d.h. von der Basisstation zur Teilnehmerstation, als auch in Abwärtsrichtung von der Teilnehmerstation zur Basisstation erfolgt.

Aus WO 99/07170 A2 ist bekannt, für die Signalisierung einer Zuweisung von Übertragungsressourcen eine Verkehrskanalliste und eine Zeitplanungsliste zu übertragen.

Zur Übertragung von Daten zwischen zwei Kommunikationsendgeräten kann auf verbindungsorientierte Konzepte und Konzepte auf der Basis logischer Verbindungen zurückgegriffen werden. Bei verbindungsorientierten Datenübertragungen müssen während der gesamten Zeit der Datenübertragung Übertragungsressourcen zwischen den zwei Kommunikationsendgeräten bereitgestellt werden.

Bei der Datenübertragung über logische Verbindungen ist eine dauerhafte Bereitstellung von Übertragungsressourcen nicht nötig. Ein Beispiel für eine solche Datenübertragung ist die Paketdatenübertragung. Hier besteht während der Dauer der gesamten Datenübertragung eine logische Verbindung zwischen den zwei Teilnehmerstationen, jedoch werden Übertragungsressourcen nur während der eigentlichen Übertragungszeiten der Datenpakete bereitgestellt. Dieses Verfahren basiert darauf, daß die Daten in kurzen Datenpaketen, zwischen denen längere Pausen auftreten können, übermittelt werden. In den Pausen zwischen den Datenpaketen sind die Übertragungsressourcen für andere logische Verbindungen verfügbar. Bezogen auf eine logische Verbindung werden Übertragungsressourcen eingespart.

Aus dem GSM-Mobilfunksystem ist die Übertragung von Datenpaketen mit dem GPRS (General Packet Radio Service) bekannt. Für die Aufwärtsrichtung werden 8 Mobilstationen einem TCH (Traffic Channel), der aus 8 Zeitschlitzen in einem Frequenzband besteht, zugeordnet. Ein USF (Uplink State Flag) wird als Inband-Signalisierung in einem Nutzdatenkanal übertragen. Das USF gibt an, welche Mobilstation im folgenden TDMA-Rahmen in Aufwärtsrichtung im selben Zeitschlitz und entsprechendem Frequenzband senden kann. Aufgrund der geringen Anzahl von 8 Mobilstationen für einen zugeordneten TCH führt dies zu einer schlechten statistischen Verteilung und somit zu langen Warteschlangen für die Datenpakete.

Der Erfindung liegt die Aufgabe zu Grunde, ein Verfahren zur Zuweisung von Übertragungsressourcen zu bestehenden logischen Verbindungen anzugeben, das eine flexible Zuweisung der Übertragungsressourcen ermöglicht.

Diese Aufgabe wird durch das Verfahren mit den Merkmalen des Patentanspruchs 1 gelöst. Vorteilhafte Weiterbildungen der Erfindung sind den Unteransprüchen zu entnehmen.

Im erfindungsgemäßen Verfahren werden Übertragungsressourcen zu bestehenden logischen Verbindungen zugewiesen. Die logischen Verbindungen bestehen zwischen Teilnehmerstationen und einer Basisstation eines Funk-Kommunikationssystems. Die Verbindungen zwischen den Teilnehmerstationen und der Basisstation bestehen logisch, so daß keine vollständige Verbindungsaufbauprozedur mehr erfolgen muß. Die Teilnehmerstationen bzw. die Basisstation befinden sich in einem aktiven Modus, so daß sie ständig Signalisierungsinformationen und ggf. gesendete Daten empfangen können. Das Funk-Kommunikationssystem ist beispielsweise ein Mobilfunksystem oder ein System mit einem Satelliten als Basisstation und mobilen oder stationären Funkstationen als Teilnehmerstationen.

Eine Übertragungsressource ist beispielsweise durch ein Frequenzband, einen Spreizkode und einen Zeitschlitz definiert. Ein Teil der Übertragungsressourcen kann nicht zuweisbar sein, weil diese Übertragungsressourcen beispielsweise für eine Signalisierung oder einen Notruf u.U. ständig benötigt werden. Zumindest ein Teil der Übertragungsressourcen ist folglich den logischen Verbindungen zur Datenübertragung zumindest temporär zuweisbar. Beispielsweise wird eine Übertragungsressource für die Datenübertragung der logischen Verbindungen reserviert und ist ständig zuweisbar.

Andere Übertragungsressourcen sind dagegen lediglich temporär zuweisbar. Mit beispielsweise einer entsprechenden Priorisierung kann die Zuweisung aufgrund einer Anforderung einer Übertragung höherer Priorität aufgehoben werden. Andere Übertragungsressourcen sind beispielsweise temporär, beispielsweise jeden zehnten Rahmen mit einem Signalisierungskanal belegt und können temporär, in den neun verbleibenden Rahmen, zugewiesen werden.

Die Zuweisung der Übertragungsressourcen erfolgt in einem Signalisierungskanal. Der Signalisierungkanal wird von der Basisstation oder einer Teilnehmerstation gesendet und ermöglicht es, daß eine netzseitige Einrichtung, beispielsweise die Basisstation, oder eine bestimmte Teilnehmerstation die Freigabe der Übertragungsressourcen steuert. Der Signalisierungskanal wird in einer oder mehreren Übertragungsressourcen gesendet und enthält die Kennungen, beispielsweise in einer fortlaufenden Reihenfolge.

Der Signalisierungskanal wird zumindest von den Teilnehmerstationen der logischen Verbindungen empfangen. Der Signalisierungkanal wird beispielsweise von der Basisstation mit Hilfe einer omnidirektional abstrahlenden Antenne in die zugehörige Funkzelle gesendet. Alternativ kann der Signalisierungskanal auch von einer Teilnehmerstation gesendet werden und von anderen Teilnehmerstationen und der Basisstation empfangen werden.

Zur Zuweisung wird für jede zuweisbare Übertragungsressource oder Gruppe von Übertragungsressourcen im Signalisierungskanal eine Kennung übertragen. Die Gruppe der Übertragungsressource ist dabei fest vorgegeben oder beispielsweise von einer netzseitigen Einrichtung konfigurierbar. Die Kennung besteht beispielsweise aus wenigen Bits. Die Anzahl der Bits ist entweder fest oder wird beispielsweise anhand der Anzahl der logischen Verbindungen oder der Anzahl der Teilnehmerstationen konfiguriert.

In einer Ausgestaltung der Erfindung werden beispielsweise für eine Verschachtelungstiefe (Interleaving) von 4, dementsprechend 4 beispielsweise aufeinanderfolgende Ressourceneinheiten einer Übertragungsressource zu einer Gruppe zusammengefaßt. Zusätzlich können innerhalb eines Rahmens mehrere Übertragungsressourcen für eine höhere Übertragungsrate zu einer Gruppe zusammengefaßt werden. Eine Gruppe von Übertragungsressoucen kann beispielsweise auch als Radioblock bezeichnet werden.

In einer vorteilhaften Weiterbildung der Erfindung ist die Kennung einer der logischen Verbindungen zugeordnet. Hat eine Teilnehmerstation wiederum mehrere logische Verbindungen aufgebaut, wird beispielsweise die Zuweisung der Übertragungsressouce von einer weiteren Teilnehmerstation oder einer netzseitigen Einrichtung oder einem Satelliten gesteuert. So kann besonders vorteilhaft der Funkverkehr zu Zeiten hoher Last gesteuert werden.

In einer vorteilhaften Weiterbildung der Erfindung werden die Übertragungsressourcen in Aufwärtsrichtung zugewiesen und der Signalisierungskanal wird in Abwärtsrichtung gesendet. Diese Weiterbildung ist besonders für ein Mobilfunksystem vorteilhaft, da so die netzseitige Einrichtung, beispielsweise die Basisstation, die Übertragungsressourcen der Aufwärtsrichtung steuert. Eine Koordinierung zwischen den Teilnehmerstationen zur Zuweisung der Übertragungsressourcen in Aufwärtsrichtung ist dagegen mit einem hohen Signalisierungsaufwand ebenfalls möglich.

In einer vorteilhaften Weiterbildung der Erfindung wird im Signalisierungskanal eine Zusatzkennung der zuweisbaren Übertragungsressourcen übertragen. Werden die Übertragungsressourcen beispielsweise durchnumeriert, erhält die jeweilige Zusatzkennung eine der Übertragungsressource entsprechende Nummer. Alternativ enthält die Zusatzkennung der zuweisbaren Übertragungsressource eine Numerierung für den Zeitschlitz und den Spreizkode, so daß besonders vorteilhaft eine Gruppe der Übertragungsressourcen eine Zusatzkennung erhält und Ressourcen der Signalisierung eingespart werden können. In einer Weiterbildung der Erfindung werden die Kennung der logischen Verbindung der Zusatzkennung der Übertragungsressource einander zugeordnet. Beispielsweise werden die zugeordneten Kennungen und Zusatzkennungen im Signalisierungskanal aufeinander folgend übertragen.

In einer vorteilhaften Ausgestaltung der Erfindung werden die Kennungen von einer netzseitigen Einrichtung, beispielsweise der Basisstation, konfiguriert. Mit der Konfiguration legt die netzseitige Einrichtung beispielsweise die Zuordnung von der Nummer der Übertragungsressource zu Zeitschlitz und Spreizkode fest. Auch die Zuordnung der Kennungen zu den Teilnehmerstationen bzw. logischen Verbindungen wird beispielsweise von der netzseitigen Einrichtung konfiguriert. Analog werden die Zusatzkennungen zu den jeweiligen Übertragungsressourcen zugeordnet.

Je nach der Anzahl der logischen Verbindungen werden die Kennungen der logischen Verbindungen entweder durchnumeriert oder beispielsweise die Kennungen der Übertragungsressource konfiguriert. Ebenfalls wird die Anzahl der zumindest temporär zuweisbaren Übertragungsressourcen von der Basisstation konfiguriert.

Vorteilhaft wird die Konfiguration von der Basisstation den Teilnehmerstationen signalisiert. Die Signalisierung der Konfiguration erfolgt beispielsweise beim Verbindungsaufbau oder während bestehender Verbindungen über den Signalisierungskanal oder den Pilotkanal (BCCH) der Basisstation. Die Signalisierung der Konfiguration erfolgt beispielsweise periodisch alle 20 Sekunden.

In einer besonders vorteilhaften Ausgestaltung der Erfindung wird der Signalisierungskanal zusammen mit mindestens einem weiteren Signalisierungskanal, beispielsweise dem Pilotkanal (BCCH), in mindestens einer Übertragungsressource übertragen. Für eine entsprechend geringe Anzahl der logischen Verbindungen kann die Übertragungsressource für den Signalisierungskanal eingespart und anderweitig genutzt werden, wenn der Signalisierungskanal mit mindestens einem weiteren Signalisierungskanal gemischt wird.

Sind dagegen viele Übertragungsressourcen vielen logischen Verbindungen zuweisbar, wird der Signalisierungskanal vorteilhaft in mehreren Übertragungsressourcen übertragen. In einer vorteilhaften Ausgestaltung der Erfindung wird der Signalisierungskanal gleichzeitig mit dem Pilotkanal der Basisstation gesendet.

In einer weiteren vorteilhaften Weiterbildung der Erfindung werden vorteilhaft innerhalb eines Zeitschlitzes mehrere Übertragungsressourcen einer logischen Verbindung zugewiesen. So wird besonders einfach konfigurierbar die Übertragungsrate in Aufwärtsrichtung erhöht.

Im Folgenden wird die Erfindung anhand von Ausführungsbeispielen bezugnehmend auf zeichnerische Darstellungen näher erläutert.

Dabei zeigen
- FIG 1: ein Blockschaltbild eines Funk-Kommunikationssystems, insbesondere eines Mobilfunksystems,
- FIG 2: eine schematische Darstellung der Funkschnittstelle zwischen Basisstationen und Teilnehmerstationen,
- FIG 3 bis FIG 5: eine schematische Darstellung von Übertragungsressourcen in Aufwärtsrichtung und einer entsprechenden Signalisierungen durch einen Signalisierungskanal.

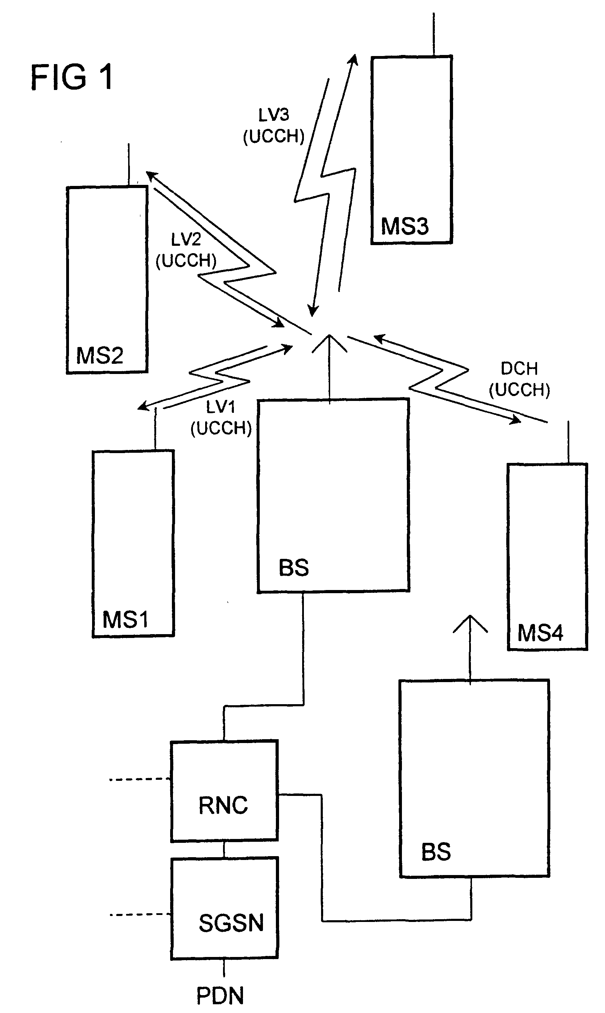

Das in FIG 1 dargestellte und beispielhaft als ein Mobilfunksystem ausgestaltete Funk-Kommunikationssystem besteht aus einer Vielzahl von Mobilvermittlungsstellen SGSN, die untereinander vernetzt sind bzw. den Zugang zu einem Festnetz PDN herstellen. Weiterhin sind diese Mobilvermittlungsstellen SGSN mit jeweils zumindest einer Einrichtung zur Zuteilung funktechnischer Ressourcen RNC verbunden. Jede dieser Einrichtungen RNC ermöglicht wiederum eine Verbindung zu zumindest einer Basisstation BS.

Diese Basisstation BS ist eine Funkstation, die über eine Funkschnittstelle Kommunikationsverbindungen zu mobilen oder stationären Teilnehmerstationen MS1, MS2, MS3 und MS4 aufbauen und signalisieren kann. Die Funktionalität dieser Struktur wird von dem erfindungsgemäßen Verfahren genutzt. Ein Einsatz in beispielsweise einem drahtlosen Teilnehmeranschlußsystem (Access-Network) ist dabei ebenso möglich.

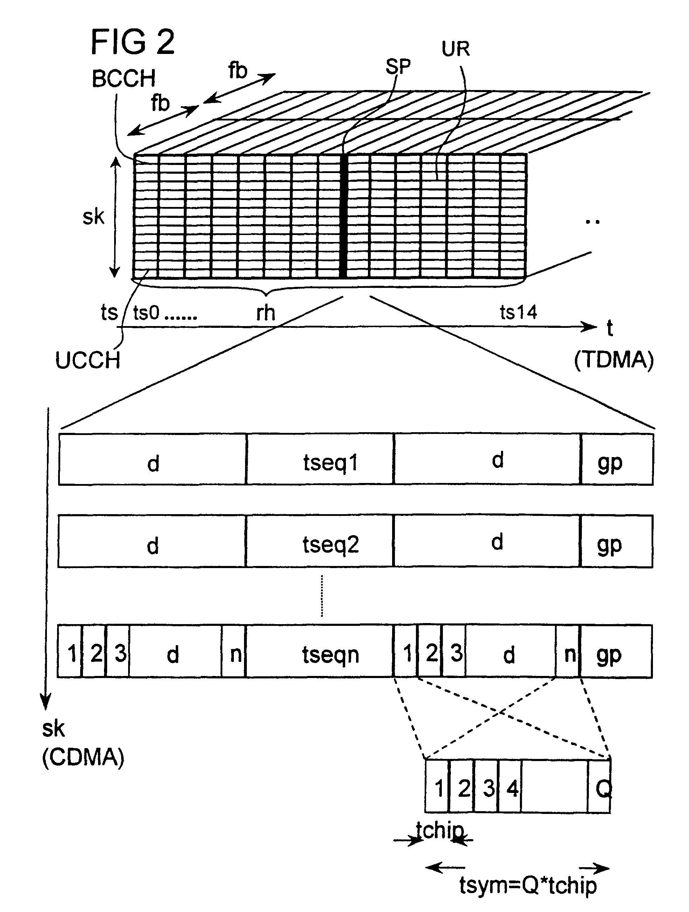

Gemeinsam genutzte Übertragungskanäle, die aus einer oder mehreren Übertragungsressourcen UR bestehen (Fig 2), werden nicht exklusiv einer Übertragung von mehreren Teilnehmerstationen MS1 und MS3 zur Basisstation BS zugeordnet. Sie werden für nicht-zeitkritische Informationen, beispielsweise verzögerte Übertragungen von Datenpaketen, von unterschiedlichen Teilnehmerstationen MS1 bis MS3 zur Basisstation BS genutzt.

Um eine Kollisionswahrscheinlichkeit der zu übertragenden Datenpakete in den gemeinsam genutzten Übertragungskanälen merklich zu reduzieren, bestehen zwischen den Teilnehmerstationen MS1 bis MS3 und der Basisstation BS logische Verbindungen LV1 bis LV3. Mit einem Signalisierungskanal oder einer Inband-Signalisierung informiert die Teilnehmerstation MS1, MS2 oder MS3 die Basisstation BS, daß mindestens ein Datenpaket zur Übertragung zur Basisstation BS in einer Warteschleife gespeichert ist.

Die Basisstation BS gibt anhand der Auswertung einer Priorisierung der Teilnehmerstationen MS1 bis MS3 oder anhand der Auswertung von Dienst-Güte-Parametern die gemeinsam genutzten Übertragungskanäle der jeweiligen Teilnehmerstation MS1, MS2 oder MS3 zur Übertragung frei.

Die Freigabe wird erfindungsgemäß in einem Signalisierungskanal UCCH signalisiert. Die Teilnehmerstation MS1, MS2 oder MS3 sendet daraufhin, beispielsweise im selben Rahmen (Fig2), Datenpakete zur Basisstation BS.

Von der Teilnehmerstation MS4 zu der Basisstation BS ist ein Übertragungskanal DCH in Aufwärtsrichtung zur unverzögerten Übertragung von zeitkritischen Informationen exklusiv eingerichtet. Dieser Übertragungskanal DCH kann aus einer oder mehreren Übertragungsressourcen UR bestehen (Fig 2). Dieser Übertragungskanal DCH ist für die Maximalwerte stark schwankender Datenraten ausgelegt. Besonders zeitkritische Anwendungen mit stark schwankenden Datenraten, die mit geringer Verzögerung übertragen werden müssen, wie beispielsweise Video-Übertragungen oder Sprachübertragungen mit einer Unterbrechung der Übertragung während der Sprachpausen (VAD, Voice Activity Detection), benötigen für diese Dienste einen exklusiv zugeordneten Übertragungskanal DCH. In diesem Übertragungskanal DCH wird die Übertragung der zeitkritischen Informationen nicht durch die Übertragung von nicht-zeitkritischen Informationen von weiteren Teilnehmerstationen MS1 bis MS3 verzögert.

Während der Übertragungspausen in logischen Verbindungen zur Übertragung zeitkritischer Daten hoher Priorität können zusätzliche Datenpakete der logischen Verbindungen LV1 bis LV3 übertragen werden, wenn die, durch die erfindungsgemäße Signalisierung, verursachten Verzögerungen der zeitkritischen Informationen hinnehmbar sind.

Auch in diesem Fall wird die erfindungsgemäße Signalisierung zur Freigabe in dem Signalisierungskanal UCCH übertragen. Die Teilnehmerstation MS1, MS2 und MS3 senden in den Übertragungspausen ein oder mehrere Datenpakete zur Basisstation BS.

Eine beispielhafte Rahmenstruktur der Funkschnittstelle eines TDD-Übertragungsverfahrens ist aus der FIG 2 ersichtlich. Gemäß einer TDMA-Komponente ist eine Aufteilung eines breitbandigen Frequenzbandes fb, beispielsweise der Bandbreite von 5 MHz vorgesehen. Eine Übertragungsressource UR ist durch ein Frequenzband fb, einen Spreizkode sk und einen Zeitschlitz ts definiert. Die günstigste Separierung ist mit orthogonalen Spreizkodes möglich. Eine Übertragungsressource UR ist die kleinste Einheit, die einer Teilnehmerstation MS1, MS2, MS3 oder MS4 zur Datenübertragung zuweisbar ist. Innerhalb eines breitbandigen Frequenzbandes fb werden die aufeinanderfolgenden Zeitschlitze ts nach einer Rahmenstruktur gegliedert. So werden 15 Zeitschlitze ts0 bis ts14 zu einem Rahmen rh zusammengefaßt.

Bei einer Nutzung eines TDD-Übertragungsverfahrens wird ein Teil der Zeitschlitze ts8 bis ts14 in Aufwärtsrichtung und ein Teil der Zeitschlitze ts0 bis ts7 in Abwärtsrichtung benutzt, wobei die Übertragung in Abwärtsrichtung beispielsweise vor der Übertragung in Aufwärtsrichtung erfolgt. Dazwischen liegt ein Umschaltzeitpunkt SP, der entsprechend dem jeweiligen Bedarf an Übertragungskanälen für die Auf- und Abwärtsrichtung flexibel positioniert wird.

Mit Channel-Pooling werden einer Kommunikationsverbindung jeweils ein oder mehrere Übertragungsressourcen UR zugewiesen. Das Verfahren des Channel-Poolings wird vorteilhaft eingesetzt, um Kommunikationsverbindungen zu bzw. von Teilnehmerstationen MS1 bis MS4 mit unterschiedlichen Datenraten zu realisieren oder um auf einer Kommunikationsverbindung mehrere Dienste parallel zu betreiben. Hierzu werden mehrere Übertragungsressourcen UR zur Übertragung für eine Verbindung zusammengefaßt. Günstig ist ebenfalls die Zusammenfassung von beispielsweise 4 Ressourceneinheiten der Übertragungsressource UR für eine Kommunikationsverbindung, wobei die in den 4 Ressourceneinheiten zu übertragenen Daten verschachtelt (interleaving) werden und so eine höhere Zuverlässigkeit der Übertragung erreicht wird.

Innerhalb des Rahmens rh sind entsprechend einer Ausgestaltung der Erfindung ein Signalisierungskanal UCCH in Abwärtsrichtung zur Zuweisung von Übertragungsressourcen UR in Aufwärtsrichtung für die logischen Verbindungen LV1 bis LV3 und der allgemeine Signalisierungskanal BCCH dargestellt. In diesem Ausführungsbeispiel umfassen die Signalisierungskanäle UCCH und BCCH jeweils eine Übertragungsressource UR.

Innerhalb der Übertragungsressourcen UR werden Informationen in Funkblöcken übertragen. Diese Funkblöcke bestehen aus Abschnitten mit Daten d, in denen jeweils Abschnitte mit empfangsseitig bekannten Trainingssequenzen tseq1 bis tseqn eingebettet sind. Die Daten d sind verbindungsindividuell mit einer Feinstruktur, einem Spreizkode sk (CDMA-Kode), gespreizt, so daß empfangsseitig beispielsweise 14 Verbindungen durch diese CDMA-Komponente separierbar sind. Die Kombination aus einem Frequenzband fb, einem Zeitschlitz ts und einem Spreizkode sk definiert eine Übertragungsressource UR, die für die Übertragung von Nutz- bzw. Signalisierungsinformationen genutzt wird.

Die Spreizung von einzelnen Symbolen der Daten d mit Q Chips bewirkt, daß innerhalb der Symboldauer tsym Q Subabschnitte der Dauer tchip übertragen werden. Die Q Chips bilden dabei den individuellen Spreizkode sk. Weiterhin ist innerhalb des Zeitschlitzes ts eine Schutzzeit gp zur Kompensation unterschiedlicher Signallaufzeiten der Verbindungen aufeinanderfolgender Zeitschlitze ts vorgesehen.

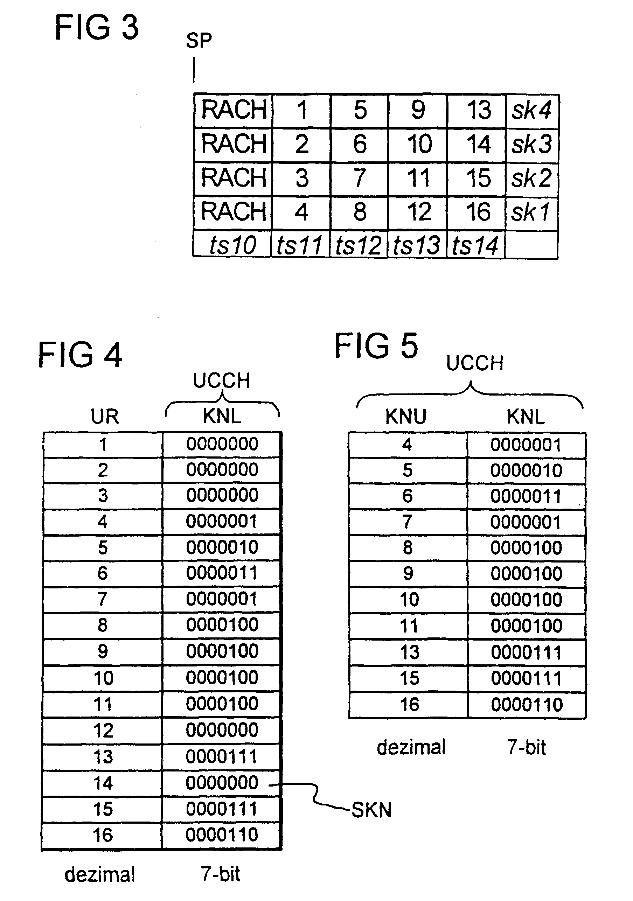

In FIG 3 sind beispielhaft 20 Übertragungsressourcen UR in Aufwärtsrichtung dargestellt. Diese Übertragungsressourcen UR werden nach dem Umschaltpunkt SP übertragen. Die Übertragungsressourcen UR bestehen aus Zeitschlitzen ts10 bis ts14 mit jeweils Spreizkodes sk1 bis sk4. Von den Übertragungsressourcen UR sind die Übertragungsressourcen UR des Zeitschlitzes ts10 für eine Übertragung der Daten von logischen Verbindungen LV1 bis LV3 nicht zuweisbar, da sie für einen weiteren Signalisierungskanal RACH konfiguriert werden.

Die verbleibenden Übertragungsressourcen UR werden in dem Ausführungsbeispiel durchnumeriert, und diese Durchnumerierung den Teilnehmerstationen MS1 bis MS4 signalisiert.

In FIG 4 und FIG 5 sind 2 Möglichkeiten dargestellt, wie ein Signalisierungskanal UCCH die 16 zuweisbaren Übertragungsressourcen UR aus FIG 3 den einzelnen bestehenden logischen Verbindungen LV1 bis LV3 zuweist.

In FIG 4 werden in dem Signalisierungskanal UCCH jeweils 7 bits in einer festen, den Teilnehmerstationen MS1 bis MS4 bekannten, Reihenfolge übertragen. In der Tabelle ist aufgeführt, daß für die Übertragungsressourcen UR 1 bis 16 in fortlaufender Reihenfolge jeweils 7 bits für 127 Teilnehmerstationen MS1, MS2, MS3 logischer Verbindungen LV1,LV2,LV3 zugeordnet sind. Die Numerierung der Übertragungsressourcen UR braucht dementsprechend nicht mit übertragen zu werden.

Im Ausführungsbeispiel entspricht die Bitfolge 0000000 beispielsweise einem exklusiv zugewiesenen Kanal und ist damit eine Sperrkennung SKN. Die Kennung KNL ist durch eine Bitfolge ungleich 0000000 definiert und gibt die jeweilige logische Verbindung LV1 bis LV3 an. So gibt die Bitfolge 0000001 die Freigabe mindestens einer Gruppe der Übertragungsressource UR4 für eine Übertragung von Daten der logischen Verbindung LV1 an.

Im Gegensatz zu FIG 4 wird in der FIG 5 dargestellt, daß im Signalisierungskanal UCCH nicht nur die Kennung KNL einer logischen Verbindung LV1 bis LV3, sondern zusätzlich eine Kennung KNU der Übertragungsressourcen UR übertragen wird. Gegenüber FIG 4 ist die Übertragung einer Sperrkennung SKN nicht nötig. Jedoch ist die Kennung KNU der Übertragungsressource UR zusätzlich zu übertragen, so daß das Ausführungsbeispiel besonders für eine geringe Anzahl von Übertragungsressourcen UR vorteilhaft ist.

Die in FIG 4 und FIG 5 dargestellten Signalisierungen durch den Signalisierungskanal UCCH geben beispielsweise die Übertragungsressourcen UR für die nächsten 4 Rahmen rh frei, um eine Verschachtelungstiefe von 4 zu erreichen. Können dagegen auch Übertragungsressourcen UR während einer Pause in einer zeitkritischen Übertragung für eine Übertragung der Daten der logischen Verbindungen LV1 bis LV3 freigegeben werden, so wird beispielsweise nur die Übertragungsressource UR eines Rahmens rh freigegeben, um die zeitkritischen Daten nicht zu verzögern.

## Patentansprüche

1. Verfahren zur Zuweisung von Übertragungsressourcen (UR) zu bestehenden logischen Verbindungen (LV1,LV2,LV3) zwischen Teilnehmerstationen (MS1,MS2,MS3) und einer Basisstation (BS) in einem Funk-Kommunikationssystem, bei dem
zumindest ein Teil der Übertragungsressourcen (UR) den logischen Verbindungen (LV1,LV2,LV3) zur Datenübertragung zumindest temporär zuweisbar ist,
die Zuweisung der Übertragungsressourcen (UR) in einem von der Basisstation (BS) in Abwärtsrichtung (DL) gesendeten Signalisierungskanal (UCCH) erfolgt,
der Signalisierungskanal (UCCH) von zumindest den Teilnehmerstationen (MS1,MS2,MS3) der logischen Verbindungen (LV1,LV2,LV3) empfangen wird, **dadurch gekennzeichnet, dass**
zur Zuweisung für jede zuweisbare Übertragungsressource (UR) oder Gruppe von Übertragungsressourcen (UR) eine Kennung (KNU) der Übertragungsressource (UR) und eine dieser Kennung (KNU) jeweils zugeordnete Kennung (KNL) der logischen Verbindung (LV1,LV2,LV3) im Signalisierungskanal (UCCH) übertragen wird.

2. Verfahren nach Anspruch 1, bei dem
die Zusatzkennung (KNU) eine Numerierung für den Zeitschlitz (ts) und den Spreizkode (sk) enthält.

3. Verfahren nach einem der vorhergehenden Ansprüche, bei dem die Kennungen (KNL, KNU) von einer netzseitigen Einrichtung (BS) konfiguriert werden.

4. Verfahren nach Anspruch 3, bei dem
die Konfiguration von der netzseitigen Einrichtung (BS) den Teilnehmerstationen (MS1,MS2,MS3,MS4) signalisiert wird.

5. Verfahren nach einem der vorhergehenden Ansprüche, bei dem der Signalisierungskanal (UCCH) zusammen mit mindestens einem weiteren Signalisierungskanal (BCCH) in mindestens einer Übertragungsressouce (UR) übertragen wird.

6. Verfahren nach einem der vorhergehenden Ansprüche, bei dem innerhalb eines Zeitschlitzes (ts) mehrere Übertragungsressourcen (UR) einer logischen Verbindung (LV1,LV2,LV3) zugewiesen werden.

## Claims

1. Method for allocating transmission resources (UR) to existing logical connections (LV1, LV2, LV3) between subscriber stations (MS1, MS2, MS3) and a base station (BS) in a radio communication system, wherein
at least some of the transmission resources (UR) can be allocated at least temporarily to the logical connections (LV1, LV2, LV3) for the purpose of data transmission,
the transmission resources (UR) are allocated in a signalling channel (UCCH) transmitted in the downlink direction (DL) by the base station (BS),
the signalling channel (UCCH) is received by at least the subscriber stations (MS1, MS2, MS3) of the logical connections (LV1, LV2, LV3),
**characterised in that**
an identifier (KNU) of the transmission resource (UR) and an identifier (KNL) of the logical connection (LV1, LV2, LV3) which is assigned in each case to said identifier (KNU) is transmitted in the signalling channel (UCCH) for the purpose of allocation for each allocatable transmission resource (UR) or group of transmission resources (UR).

2. Method according to claim 1, wherein
the supplementary identifier (KNL) contains a numbering scheme for the time slot (ts) and the spreading code (sk).

3. Method according to one of the preceding claims, wherein the identifiers (KNL, KNU) are configured by a network-side device (BS).

4. Method according to claim 3, wherein
the configuration of the network-side device (BS) is signalled to the subscriber stations (MS1, MS2, MS3, MS4).

5. Method according to one of the preceding claims, wherein the signalling channel (UCCH) is transmitted together with at least one further signalling channel (BCCH) in at least one transmission resource (UR).

6. Method according to one of the preceding claims, wherein a plurality of transmission resources (UR) of a logical connection (LV1, LV2, LV3) are allocated within one time slot (ts).

## Revendications

1. Procédé pour l'affectation de ressources de transmission (UR) à des connexions logiques existantes (LV1, LV2, LV3) entre des stations d'abonnés (MS1, MS2, MS3) et une station de base (BS) dans un système de radiocommunication, dans lequel
au moins une partie des ressources de transmission (UR) peut être affectée, tout du moins temporairement, aux connexions logiques (LV1, LV2, LV3) pour la transmission de données,
l'affectation des ressources de transmission (UR) est réalisée dans un canal de signalisation (UCCH) émis par la station de base (BS) en sens descendant (DL),
le canal de signalisation (UCCH) est reçu par au moins les stations d'abonnés (MS1, MS2, MS3) des connexions logiques (LV1, LV2, LV3),
**caractérisé en ce que**
une identification (KNU) de la ressource de transmission (UR) et une identification (KNL) de la connexion logique (LV1, LV2, LV3), respectivement affectée à cette identification (KNU), sont transmises dans le canal de signalisation (UCCH) pour l'affectation, pour chaque ressource de transmission (UR) ou pour chaque groupe de ressources de transmission (UR) pouvant être affecté.

2. Procédé selon la revendication 1, dans lequel
l'identification supplémentaire (KNU) comprend une numérotation pour le créneau temporel (ts) et le code d'étalement (sk).

3. Procédé selon l'une quelconque des revendications précédentes, dans lequel
les identifications (KNL, KNU) sont configurées par un dispositif (BS) côté réseau.

4. Procédé selon la revendication 3, dans lequel
la configuration du dispositif (BS) côté réseau est signalée aux stations d'abonnés (MS1, MS2, MS3, MS4).

5. Procédé selon l'une quelconque des revendications précédentes, dans lequel
le canal de signalisation (UCCH) est transmis avec au moins un autre canal de signalisation (BCCH) dans au moins une ressource de transmission (UR).

6. Procédé selon l'une quelconque des revendications précédentes, dans lequel
plusieurs ressources de transmission (UR) sont affectées à une connexion logique (LV1, LV2, LV3) dans un créneau temporel (ts).
